(19) Europäisches Patentamt
European Patent Office
Office européen des brevets

(11) **EP 2 574 124 A2**

(12) **EUROPEAN PATENT APPLICATION**

(43) Date of publication:
**27.03.2013 Bulletin 2013/13**

(51) Int Cl.:
***H04W 64/00*** (2009.01)

(21) Application number: **12198035.3**

(22) Date of filing: **24.08.2004**

(84) Designated Contracting States:
**AT BE BG CH CY CZ DE DK EE ES FI FR GB GR HU IE IT LI LU MC NL PL PT RO SE SI SK TR**

(30) Priority: **21.11.2003 US 524332 P**

(62) Document number(s) of the earlier application(s) in accordance with Art. 76 EPC:
**04782073.3 / 1 695 566**

(71) Applicant: **Qualcomm Incorporated
San Diego, CA 92121-1714 (US)**

(72) Inventor: **Rick, Roland
San Diego, CA, 92121-1714 (US)**

(74) Representative: **Wegner, Hans
Bardehle Pagenberg Partnerschaft
Patentanwälte, Rechtsanwälte
Prinzregentenplatz 7
81675 München (DE)**

Remarks:
This application was filed on 19-12-2012 as a divisional application to the application mentioned under INID code 62.

(54) **Estimating a position of a wireless mobile device with respect to one or more base station**

(57) A first method for estimating a location of an MS (MS) in a communication network having a plurality of BTSs (BTSs) includes determining an area in which the MS can communicate with only one of the BTSs. A mean location within the area is calculated and used as the estimate. A second method includes determining an area in which the MS is within an overlapping coverage area of two of the BTSs. A locus of distance points at which a relative time difference of arrival of signals received by the MS from each of the BTSs is constant is determined. A point at which a line having an angle $\theta$ based upon relative signal power at the MS between first and second sectors of one of the BTSs intersects the locus is determined, and used as the estimate of the MS location.

FIG. 2

**Description**

BACKGROUND

FIELD

This application relates to wireless communication systems, and more particularly to estimating the position of a wireless mobile device in such systems.

RELEVANT INFORMATION

The demand for determining the position of wireless mobile devices (herein MSs), such as a cellular phones, PDAs, laptop computers, or the like, is on the rise. One method uses signals transmitted and received by cellular telephone base stations (herein BTSs). One known algorithm developed for detecting the position of an MS using ground BTSs is referred to as Advanced Forward Link Trilateration (AFLT). To detect the position of an MS using the AFLT, the location of the BTSs in the wireless network, the transmission times of the signals from the BTSs, and the arrival times of the signals at the MS are required. Conventional AFLT algorithms require that the MS be in communications with at least three BTSs in order to detect its position.

If the MS is in the coverage area of less than three BTSs the location of the MS is often estimated. One estimation method estimates the location of the MS to be at the "center" of a coverage area of one or more of the BTSs with which the MS can communicate. For example, if the MS can communicate with only one BTS, the location is estimated to be the center of the coverage area. The "center" of the coverage area is generally understood to designate a mean position of all possible positions at which the MS can effectively operate in respect to the BTS with which it is in communication. If the MS can communicate with two BTSs, its location may be estimated to be the center of the region covered by the strongest of the two BTS, or at a position determined by taking the weighted average of the areas covered by the two BTSs.

It should be noted that a typical BTS coverage area may not be perfectly circular in shape, for a variety of reasons. Features of the terrain, such as mountains, hills, buildings, water masses, and the like affect the transmission characteristics of the radio waves radiated from the BTS, causing an irregular coverage area. Atmospheric and other factors also may affect the radiation pattern of the radio signals sent and received by the BTS.

Also, typically, each BTS has a number of transmitters that broadcast into sectorized regions surrounding the BTS. For example, a BTS having three sectors may broadcast into respective 120° regions encircling the BTS. The radio signals within those sectors also may be influenced by the various terrain, atmospheric, and other factors described above to affect the geographic coverage area of each sector. Moreover, the sector antennae are themselves generally directional antennas. Thus, typically, the signal strength on the backside of a sector antenna is significantly less than the signal strength on the front side of the sector antenna.

Since the coverage area of a particular BTS, or sector thereof, is typically asymmetrical, the "center" of the coverage area is usually not coincident with the location of the BTS (although it may be fortuitously). It can be seen that the "center" of the coverage area of a BTS sector may lie some distance away from the location of the BTS.

SUMMARY

A first method for estimating a location of an MS in a communication network having a plurality of BTSs includes determining an area in which the MS can communicate with only one of the BTSs. A mean location within the area is calculated and used as the estimate. A second method includes determining an area in which the MS is within an overlapping coverage area of two of the BTSs. A locus of distance points at which a relative time difference of arrival of signals received by the MS from each of the BTSs is constant is determined. A point at which a line having an angle, $\theta$, based upon relative signal power at the MS between first and second sectors of one of the BTSs intersects the locus is determined, and used as the estimate of the MS location.

BRIEF DESCRIPTION OF THE DRAWINGS

Fig. 1 is a simplified plan view of a pair of BTSs in a wireless network with overlapping coverage areas.
Fig. 2 is a plan view of one of the BTSs of the wireless network of Fig. 1 in greater detail.
Fig. 3 is a graph of probability distribution functions resulting from an MS in communication with one, two, three, or greater than four BTSs as a function of distance from a BTS transmitting the strongest received power.
Fig. 4 shows, in part, the position of an MS with respect to two BTSs of the wireless network of Fig. 1.
In the various figures of the drawing, like reference numbers are used to denote like or similar parts.

DETAILED DESCRIPTION

A communication system typically includes an MS and a network of BTSs. "BTS" refers to any transmitter/receiver whose location is known at the time of transmission. For example, a BTS may include a cell tower of a wireless network or other wireless transmitters or infrastructures.

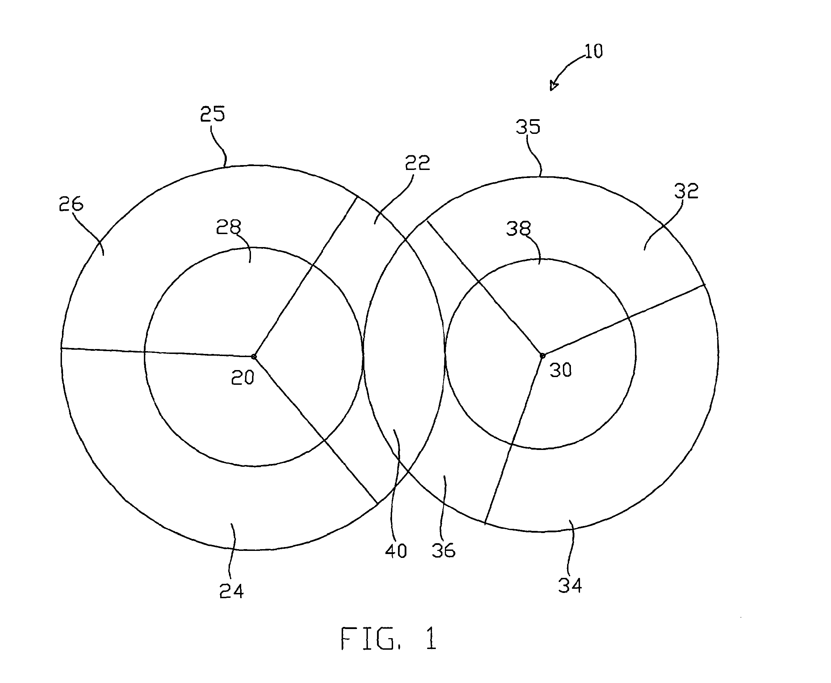

In one embodiment, if an MS is within a coverage area of only one BTS, and is thus able to communicate with that BTS only, its position may be estimated to be located at the "center" of that portion of coverage area of a BTS in which it can communicate with only that BTS. The "center" of that portion of coverage area of a BTS in which it can communicate with only that BTS is used to designate the a specific position of all possible positions at which the MS can effectively communicate only with the BTS with which it is in communication, and none others. More particularly, if an MS is able to communicate with only one BTS, the MS is located within the coverage area of that BTS but outside any overlapping coverage area of that BTS and any other BTS. With reference to Figure 1, for example, if an MS is able to communicate only with BTS 20 of wireless network 10, the MS is located within coverage area 25 but outside overlap area 40.

The specific position specified for the "center" may be, for example, a mean position. The "mean" position may be an arithmetic mean, a geometrical mean, or other appropriate mean calculation specified in terms of the portion of coverage area of a BTS in which the MS can communicate with only that BTS. On the other hand, the specific position may be arbitrarily specified in terms of the portion of coverage area of a BTS in which the MS can communicate with only that BTS. This may be, for instance, specified to be at a distance of ½, ⅓, ¼, or other distance, measured as a ratio of the boundary of the coverage region where only one BTS can be detected to the boundary of the full coverage region of that BTS. The distance, determined according to whichever metric is chosen, defines a locus of points. For example, if the portion of coverage area of a BTS in which it can communicate with only that BTS is circular (which is generally unlikely), the locus would define a circle of smaller radius than the radius of the total coverage area. The location of the MS may then be estimated to be on the perimeter of the circle.

If the BTS has a plurality of sectors, which is typically the case, an angle, $\theta$, of the MS with respect to a reference angle can be determined. A line drawn at that angle then intersects the locus at a point. The point then can be used as the position estimate of the MS. The angle, $\theta$, associated with the position of the MS may be computed using the relative measures of the signal power received by the MS from each sector of the BTS, in a manner described below in detail.

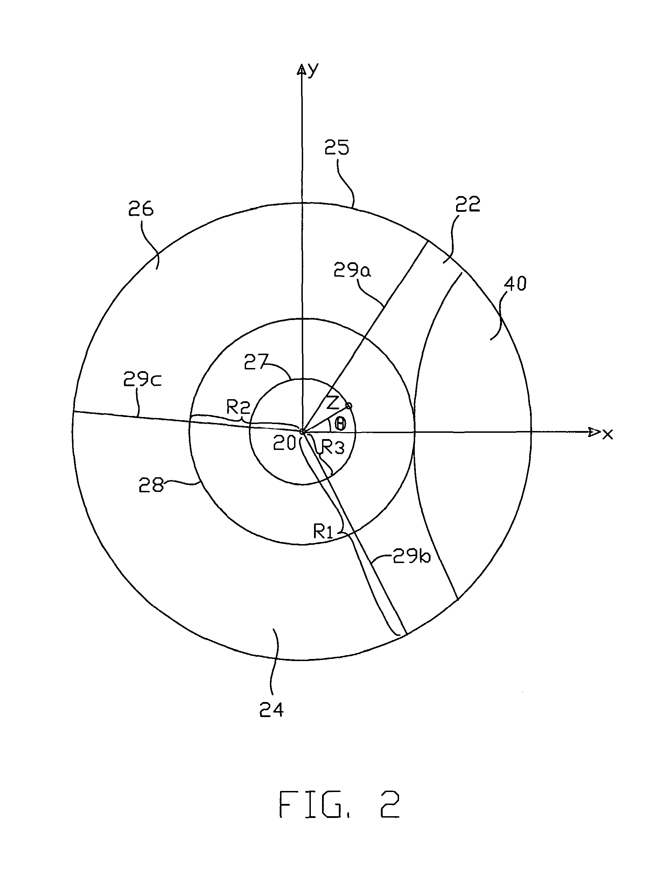

Referring now additionally to Fig. 2, a device, marked as z, is able to communicate with BTS 20 only. For simplicity, except for overlap region 40, the remaining coverage area of the adjacent BTS 30 is not shown. The coverage area 25 of the BTS 20 is simplified to be a circle having a radius $R_1$. A center area 28 is defined as being the coverage area of BTS 20 within which the MS can communicate only with the BTS 20, and is shown as a circle having a radius $R_2$. The radius, $R_2$, of the center area 28 may be, for example, one-half of the radius, $R_1$, of the circle 25, but is determined by the characteristics of the BTS 20 and the extent of the overlap region 40.

In this example, the MS is estimated to be located on the dotted circle 27 centered around BTS 20 and having a radius $R_3$, which is one-half of $R_2$, the perimeter of which being the arithmetical and geometrical mean of the coverage area 28 in which the MS can communicate only with the BTS 20. As will be demonstrated below, if the MS is able to communicate only with BTS 20, the MS is more likely to be located on the perimeter of the circle 27. This location may be determined by probabilistic prediction techniques, as discussed below, by mathematical mean calculations, or by another suitable technique.

In another embodiment, the BTS 20 may have a number of sectors associated with it, three sectors 22, 24, and 26, being shown. Although three sectors are shown, the BTS may have any number of sectors. In the three-sector embodiment, sectors 22 and 26 share common radii 29a. Similarly, sectors 22 and 24 share a common radii 29b; and sectors 24 and 26 share a common radii 29c. The x-axis divides sector 22 into two equal areas. Therefore, each radii 29a and 29b forms a 60° angle with the x-axis.

The angular position of the MS can be estimated from the signal power or strength seen by the MS from two adjacent BTS sectors. Thus, for example, if the MS is positioned close to radii 29b, the MS would be expected to receive signals from sectors 22 and 24 that have similar or substantially similar power or signal strengths. As the MS moves further into sector 22, the power or strength of the signal the MS would be expected to receive from sector 22 becomes greater than the power that the MS would be expected to receive from sector 24. As the MS moves closer to the x-axis in sector 22, the MS would be expected to receive almost no signals from sectors 24 and 26. Accordingly, the relative measure of the signal power received by the MS from each of sectors 22, 24 and 26 may be used to estimate the angle, $\theta$, of point z in the X-Y plane with respect to the x-axis.

It should be noted that typically the angle of a line bisecting the range of a sector, such as the x-axis in the particular embodiment illustrated, is specified with respect to "GPS North" in almanac data of the BTS. Thus, the angle, $\theta$, in the examples herein is only arbitrarily referenced, and may easily be translated to be defined in terms of any desired reference angle. Also, contrary to the implication of the drawing of Fig. 2, the bisecting line of a sector of an actual BTS need not necessarily align with a specific compass direction, although such alignment assists in ease of calculation.

As an example of a method for computing an estimate of the angle, θ, the following pseudo-code metric may be used:

$$if \ P_1 - P_2 \rangle 20, then \ \theta = A_1$$

$$elseif \ P_1 - P_2 \langle 3, then \ \theta = A_1 - 0.4 \times (A_1 - A_2) \qquad (1)$$

$$else \ \theta = A_1 - 0.4 \times (A_1 - A_2) \times (20 - (P_1 - P_2))/17$$

where $P_1$ is the power of the strongest received signal in dB, $A_1$ represents the angle of the sector of the BTS which transmits the signal having received power $P_1$ with respect to a reference radii, $P_2$ is the power of the second strongest received signal in dB, and $A_2$ represents the angle of the sector which transmits the signal having the received power $P_2$ with respect to the reference radii. For example, assuming that sector 22 has the strongest received power, $A_1$ represents the angle of center of sector 22, i.e., 0°, with respect to the x-axis, and $A_2$ represents the angle of center of sector 26, i.e., 240°, with respect to the x-axis, or a line equally dividing the angle between radii 29a and 29c. The constants in the metric may be heuristically derived, based, for example, on calculated probabilities of the MS, as described below.

The angle, θ, may be computed using other linear or non-linear expressions, as well. However, in such expressions, the angle, θ, is computed using the relative measure of the power of signals the MS receives from various sectors of the BTS with which it can communicate. As described above, because both the distance of the device from, as well as its angle with respect to, the BTS are estimated, a unique position estimate for the device is determined.

In some embodiments, both the distance and the angle, θ, may be determined by the MS, and the position subsequently computed and optionally transmitted to the BTS. In such embodiments, the MS may include a database that has information about the various parameters associated with each BTS, such as the location of the BTS within the wireless network, its coverage area, its center, etc. In yet other embodiments, the MS may transmit the information regarding the power of the signals it receives from each sector to the BTS. Thereafter, a Position Determination Entity (PDE), or another device in communication with the wireless network may receive the information transmitted by the MS and determine the position of the MS, as described above. In such embodiments, however, the determination of the position of the MS may be carried out using various codes of one or more software modules forming a program and executed as instructions/data by, e.g., a central processing unit, or using hardware modules specifically configured and dedicated to determine the position of the MS. Alternatively, in both embodiments, the determination of the position of the MS may be carried out using a combination of software and hardware modules.

In another embodiment, if the MS is within overlapping coverage areas of two BTSs, the time difference of arrival (TDOA) of signals received by the MS from the two BTSs together with the relative measures of the signal power received by the MS from associated sectors of one or both BTSs may be used to estimate the position of the MS.

Referring again to Fig. 1, a section of an exemplary wireless network 10 includes, in part, BTSs 20 and 30 configured to communicate with an MS (not shown). BTSs 20 and 30 have respective cells or coverage areas 25 and 35. Coverage area 25 is the area of a circle centered on BTS 20. Similarly, coverage area 35 is the area of a circle centered on BTS 30.

In this example, the BTSs 20 and 30 also have three sectors 22, 24, and 26 and, 32, 34, and 36, respectively, which may be in conformity with a Code Division Multiple Access (CDMA) or other appropriate standard. The BTSs 20 and 30 may have fewer or more sectors than three. The BTSs 20 and 30 have an overlap area 40. Although two BTSs 20 and 30 are shown in this example, the wireless network 10 may have more BTSs with coverage areas that may or may not overlap with the coverage areas 25 and 35 of BTSs 20 and 30.

The BTS 20 has a center coverage area shown by the dashed circular region 28, which is concentric with circular region 25. Similarly, BTS 30 has a center coverage region shown by the dashed circular region 38, which is concentric with circular region 35. Again, for the sake of clarity, the coverage areas are shown to be circular in shape, although in practice, they may be of irregular shape. The radius of each of circular regions 28, 38 may be, for example, half the radius of corresponding circular region 25, 35, respectively, depending upon the particular signal characteristics of the BTSs. However, the specific radii may be arbitrarily specified in terms of the portion of BTSs coverage area. This may be, for instance, specified to be at a distance of ½, ⅓, ¼, or other distance, measured as a ratio of the boundary of the coverage region where only one BTS can be detected to the boundary of the full coverage region of that BTS.

An MS located outside the coverage area 25 may not receive a signal from any of sectors 22, 24, 26 of the BTS 20. Similarly, an MS located outside the coverage area 35 may not receive a signal from any of the sectors 32, 34, 36 of the BTS 30. On the other hand, an MS located in any sector of the BTS 20 may receive a signal from that sector as well as other sectors of the BTS 20. For example, an MS located in sector 22 may receive a signal from sector 22 as well as from sectors 24 and 26. Or, an MS located in sector 24 may receive a signal from sector 24 as well as from sectors 22 and 26. Similarly, a mobile device located in any sector of the BTS 30 may receive a signal from that sector as well as other sectors of the BTS 30. A device located in overlap area 40 may receive signals from both BTSs 20 and 30.

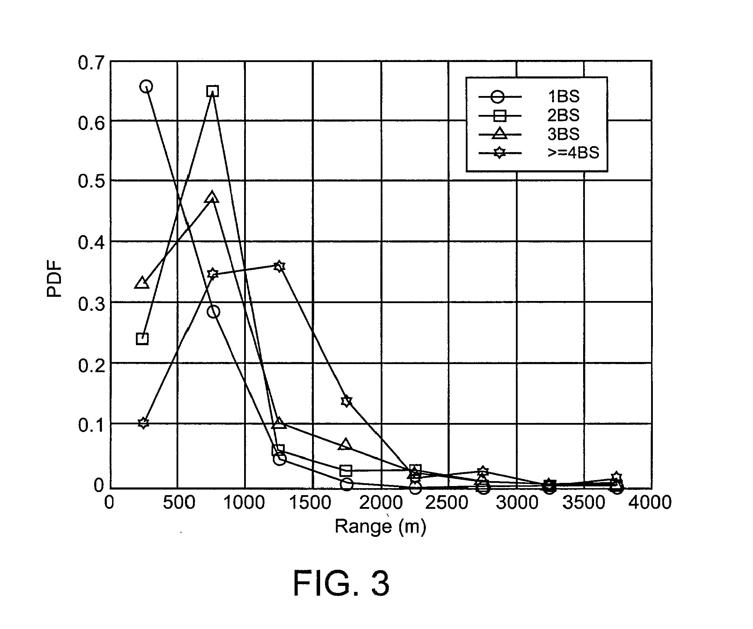

In another embodiment, the location of an MS can be estimated using heuristically determined probabilities of the position of the MS. A family of curves for various BTS numbers is shown in Fig. 3. The y-axis represents probability density function values that indicate the probability that an MS is found, and the x-axis represents distance in meters of the MS from the BTS. The data shown in Fig. 3 was heuristically determined based upon one particular cellular network location. Other cellular network locations may have different curve families. Also, the particular data shown in Fig. 3 is considered as grouped in 500 meter increments. That is, the values seen by the various shaped figures on the lines represent the PDF values for all MSs in the 500 meter segment in which the shape appears. Furthermore, for the particular data shown, it can be seen that for each BTS combination, i.e., 1 BTS, 2 BTSs, 3 BTSs, and $\geq$4 BTSs, a maximum probability value occurs. For example, when two BTSs are visible, the MS has the highest likelihood of being within 1 kilometer of the strongest BTS approximately 90% of the time, or within 1.5 kilometer of the strongest BTS 95% of the time. (Note that the probabilities along each curve sum to 1.0.)

This data may be used to estimate the location of an MS. Thus, for example, if an MS is able to communicate with only one BTS (i.e., when only one BTS is visible), the MS is within one kilometer of that BTS 95% of the time. Radii $R_2$ (see Fig. 2) may be therefore selected to be one-kilometer, or less. Or, for example, based upon the data, the user position may be estimated as being 500 meters, with the probability that 95% of the time the MS will be 500 meters or closer to the estimated position.

If an MS is able to communicate with two BTSs, it is located within the overlapping coverage area 40 of the two BTSs 20 and 30, as can be seen in Fig. 1. Under such conditions, the TDOA of the signals received by the MS from the two BTSs together with the relative measures of the signal power received by the MS from various sectors of the BTSs may be used to detect the position of the MS, as described further below.

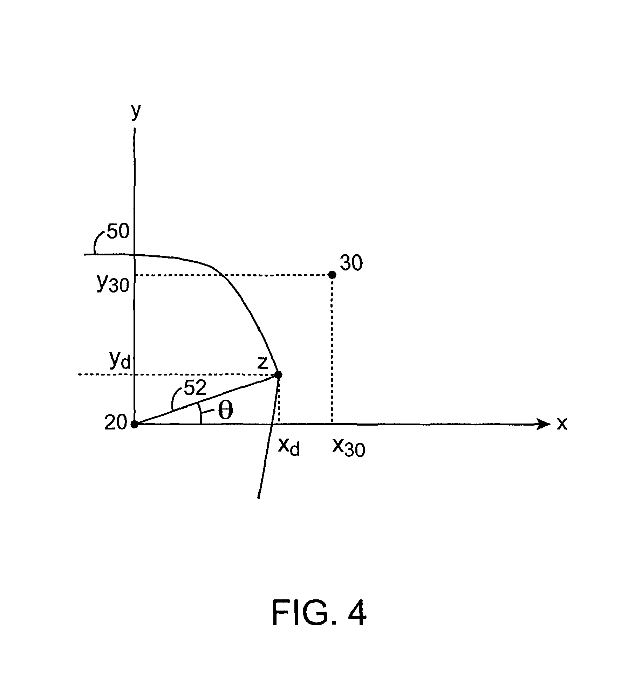

Fig. 4 shows the coordinates $x_{30}$ $y_{30}$ of, e.g., BTS 30, as well as the coordinates $x_d$, $y_d$ of the MS that is assumed to be located within the overlapping coverage areas of the two BTSs in reference to, e.g., BTS 20 that is shown at the origin of the designated x-y axes. Assume that $t_{20}$ and $t_{30}$ respectively represent the times elapsed for signal transmitted from BTSs 20 and 30 to reach the MS. In accordance with the TDOA, assuming uniform signal transmission, the possible positions of the MS is defined, on the one hand, by the points along the locus of points 50 formed using the following equation (2):

$$[(x^2 + y^2)^{1/2} - ((x - x_{30})^2 + (y - y_{30})^2)^{1/2}] = C \times (t_{20} - t_{30}) \qquad (2)$$

where C is the speed of light. In the embodiment shown, the locus of points 50 forms a parabola.

To further define the location of the MS, the angle, $\theta$, between the x-axis and a line drawn from the BTS 20 to the device is computed, as seen in Fig. 4. The intersection of the line with parabola 50 uniquely detects the position of the MS. As before, the relative measure of the power of the signals received by the MS from various sectors of the BTSs may be used to determine the angle, $\theta$.

The pseudo-code (1) shown above in computing the angle $\theta$ is equally applicable to situations where the device is able to communicate with two BTSs. Therefore, pseudo-code (1) may be used to determine the angular position of the MS with respect to the X (or Y) axis. Assume that in accordance with pseudo-code (1), the device is located along line 52 at angle $\theta$ with respect to the X-axis. Therefore, the MS is estimated to be located at point z. where line 52 is shown as intersecting the locus of points 50. It is understood that pseudo-code (1) represents only one exemplary method for computing the angle, $\theta$. Many other linear or non-linear expressions may be used to compute this angle. In all such expressions, the angle, $\theta$, is computed using the relative measure of the power of the signals received by the MS from various sectors of one or both BTSs.

In some embodiments, the parabolic curve, as well as angle $\theta$ may be determined by the device, with the position subsequently computed and optionally transmitted to the BTSs. In such embodiments, the MS may include a database that has information about the various parameters associated with each BTS, such as the location of the BTS within the wireless network, its coverage area, its center, etc. In other embodiments, the MS may transmit the information regarding the power and the time of arrival, or alternatively time difference of arrival, of the signals it receives from each sector to the BTSs. Thereafter, a Position Determination Entity (PDE), or another device in communication with the wireless network may receive the information transmitted by the MS and determine the position of the MS, as described above.

The determination of the position of the MS may be carried out using various codes of one or more software modules forming a program and executed as instructions/data by, e.g., a central processing unit, or using hardware modules specifically configured and dedicated to determine the position of the MS. Alternatively, the determination of the position of the MS may be carried out using a combination of software and hardware modules.

The disclosure is not intended to be limited to any specific number of BTSs in a wireless network, the size of the coverage area of any BTS, or the size of the overlap region between pairs of BTSs. Furthermore, the disclosure is not intended to be limited by the size of the predefined distance from a BTS where an MS is detected when that BTS is the only BTS with which the MS can communicate. Nor is the disclosure intended to be limited by the type of wireless network, BTS, or the MS. Other additions, subtractions, deletions, and modifications may be made without departing from the scope of the present disclosure as set forth in the appended claims.

**In the following, further examples are described to facilitate the understanding of the invention:**

1. A method for estimating a location of an MS in a communication network having a plurality of BTSs, comprising:

determining an area in which said MS can communicate with only one of said plurality of BTSs;
determining a mean location within said area;
and using said calculated mean location as said estimate of location of said MS.

2. The method of example 1 wherein said area is heuristically determined.
3. The method of example 1 wherein said mean is an algebraic mean.
4. The method of example 1 wherein said mean is a geometric mean.
5. A method for estimating a location of an MS in a communication network having a plurality of BTSs, each BTS having a plurality of sectors, comprising:

determining an area in which said MS can communicate with only one sector of one of said plurality of BTSs;
calculating a mean location within said area;
and using said calculated mean location as said estimate of location of said MS.

6. The method of example 5 wherein said mean is an algebraic mean.
7. The method of example 5 wherein said mean is a geometric mean.
8. The method of example 1 wherein said area is heuristically determined.
9. A method for estimating a location of an MS in a communication network having a plurality of BTSs, each BTS having a plurality of sectors, comprising:

determining an area in which said MS can communicate with only one of said plurality of BTSs;
calculating a distance to a mean location within said area;
calculating an angle $\theta$ of said MS based upon relative powers of said one sector and an adjacent sector of said one of said plurality of BTSs;
and using said distance and angle as said estimate of location of said MS.

10. The method of example 9 wherein said mean is an algebraic mean.
11. The method of example 9 wherein said mean is a geometric mean.
12. The method of example 9 wherein said area is heuristically determined.
13. The method of example 9 wherein said angle $\theta$ is calculated using linear expressions.
14. The method of example 9 wherein said angle $\theta$ is computed in accordance with the following:

$$if\ P_1 - P_2 \rangle 20, then\ \theta = A_1$$

$$elseif\ P_1 - P_2 \langle 3, then\ \theta = A_1 - 0.4 \times (A_1 - A_2)$$

$$else\ \theta = A_1 - 0.4 \times (A_1 - A_2) \times (20 - (P_1 - P_2))/17$$

wherein $P_1$ is a power of a strongest signal in dB as received by the MS, $A_1$ represents an angle of a sector of the first one of the plurality of the BTSs transmitting the signal having received power $P_1$ with respect to a reference angle, $P_2$ is a power of a second strongest signal in dB as received by the MS, and $A_2$ represents an angle of a second sector of the first one of the plurality of the BTSs transmitting the signal having received power $P_2$ with respect to said reference angle.

15. In estimating a location of an MS in a communication network having a plurality of BTSs, a method comprising:

determining probabilities that an MS is located at various distances from a BTS with which said MS can communicate;
determining a distance at which said probability has a maximum value;
and using said distance at which said probability has a maximum value as a part of said estimate of location of said MS.

16. The method of example 15 wherein said probabilities are heuristically determined.

17. A method for estimating a location of an MS in a communication network having a plurality of BTSs, comprising:

determining an area in which said MS is within an overlapping coverage area of two of said BTSs;
determining a locus of distance points at which a relative time difference of arrival of signals received by the MS from each of said two of said BTSs is constant;
determining a point at which a line having an angle $\theta$ based upon relative signal power between first and second sectors of one of said two of said BTSs at said MS intersects said locus;
and using said point as said estimate of location of said MS.

18. The method of example 17 further comprising determining said distance points by multiplying a speed of light constant by said measured time difference of arrival of signals.

19. The method of example 17 wherein said angle $\theta$ is computed using linear expressions.

20. The method of example 17 wherein said angle $\theta$ is computed in accordance with the following:

$$if\ P_1 - P_2 \rangle 20,\ then\ \theta = A_1$$

$$elseif\ P_1 - P_2 \langle 3,\ then\ \theta = A_1 - 0.4 \times (A_1 - A_2)$$

$$else\ \theta = A_1 - 0.4 \times (A_1 - A_2) \times (20 - (P_1 - P_2))/17$$

wherein $P_1$ is a power of a strongest sector signal in dB as received by the MS, $A_1$ represents an angle of said first sector transmitting the signal having received power $P_1$ with respect to a reference angle, $P_2$ is a power of a second strongest sector signal in dB as received by the MS, and $A_2$ represents an angle of said second sector transmitting the signal having received power $P_2$ with respect to said reference angle.

**Claims**

1. A method for estimating a location of an MS in a communication network having a plurality of BTSs, comprising:

determining an area in which said MS is within an overlapping coverage area of two of said BTSs;
determining a locus of distance points at which a relative time difference of arrival of signals received by the MS from each of said two of said BTSs is constant;
determining a point at which a line having an angle $\theta$ based upon relative signal power between first and second sectors of one of said two of said BTSs at said MS intersects said locus;
and using said point as said estimate of location of said MS.

2. The method of claim 1 further comprising determining said distance points by multiplying a speed of light constant by said measured time difference of arrival of signals.

**3.** The method of claim 1 wherein said angle θ is computed using linear expressions.

**4.** The method of claim 1 wherein said angle θ is computed in accordance with the following:

$$
\begin{aligned}
&if\ P_1 - P_2 \rangle 20, then\ \theta = A_1 \\
&elseif\ P_1 - P_2 \langle 3, then\ \theta = A_1 - 0.4 \times (A_1 - A_2) \\
&else\ \theta = A_1 - 0.4 \times (A_1 - A_2) \times (20 - (P_1 - P_2))/17
\end{aligned}
$$

wherein $P_1$ is a power of a strongest sector signal in dB as received by the MS, $A_1$ represents an angle of said first sector transmitting the signal having received power $P_1$ with respect to a reference angle, $P_2$ is a power of a second strongest sector signal in dB as received by the MS, and $A_2$ represents an angle of said second sector transmitting the signal having received power $P_2$ with respect to said reference angle.

**5.** An apparatus for estimating a location of an MS in a communication network having a plurality of BTSs, comprising:

means for determining an area in which said MS is within an overlapping coverage area of two of said BTSs;
means for determining a locus of distance points at which a relative time difference of arrival of signals received by the MS from each of said two of said BTSs is constant;
means for determining a point at which a line having an angle θ based upon relative signal power between first and second sectors of one of said two of said BTSs at said MS intersects said locus; and
means for using said point as said estimate of location of said MS.

**6.** The apparatus of claim 5 further comprising determining said distance points by multiplying a speed of light constant by said measured time difference of arrival of signals.

**7.** The apparatus of claim 5 wherein said angle θ is computed using linear expressions.

**8.** The apparatus of claim 5 wherein said angle θ is computed in accordance with the following:

$$
\begin{aligned}
&if\ P_1 - P_2 \rangle 20, then\ \theta = A_1 \\
&elseif\ P_1 - P_2 \langle 3, then\ \theta = A_1 - 0.4 \times (A_1 - A_2) \\
&else\ \theta = A_1 - 0.4 \times (A_1 - A_2) \times (20 - (P_1 - P_2))/17
\end{aligned}
$$

wherein $P_1$ is a power of a strongest sector signal in dB as received by the MS, $A_1$ represents an angle of said first sector transmitting the signal having received power $P_1$ with respect to a reference angle, $P_2$ is a power of a second strongest sector signal in dB as received by the MS, and $A_2$ represents an angle of said second sector transmitting the signal having received power $P_2$ with respect to said reference angle.

**9.** A method for estimating a location of an MS in a communication network having a plurality of BTSs, comprising:

determining probabilities that an MS is located at various distances from a BTS with which said MS can communicate;
determining a distance at which said probability has a maximum value;
and using said distance at which said probability has a maximum value as a part of said estimate of location of said MS.

**10.** The method of claim 9 wherein said probabilities are heuristically determined.

**11.** An apparatus for estimating a location of an MS in a communication network having a plurality of BTSs, comprising:

means for determining probabilities that an MS is located at various distances from a BTS with which said MS can communicate;

means for determining a distance at which said probability has a maximum value; and
means for using said distance at which said probability has a maximum value as a part of said estimate of location of said MS.

12. The apparatus of claim 11 wherein the means for determining probabilities is adapted for heuristically determining the probabilities.

13. A computer program comprising instructions for carrying out a method according to any of claims 1 to 4 or 9 to 10 when run on a computer.

FIG. 1

EP 2 574 124 A2

FIG. 2

FIG. 3

FIG. 4